# EUROPEAN PATENT SPECIFICATION

(11) **EP 2 719 594 B1**
(45) Date of publication and mention of the grant of the patent: **31.03.2021**
(21) Application number: 12188591.7
(22) Date of filing: 15.10.2012
(51) Int. Cl.: B60T 13/26, B60T 13/68

(54) **Method for operating an electrically operable parking brake system and control device for an electrically operable parking brake system**
Verfahren für den Betrieb eines elektrisch betätigten Parkbremssystems und Steuervorrichtung eines elektrisch betätigten Parkbremssystems
Procédé de fonctionnement d'un système de frein de stationnement à commande électrique et dispositif de commande d'un système de frein de stationnement actionnable électriquement

(43) Date of publication of application: 16.04.2014
(73) Proprietor: KNORR-BREMSE Systeme für Nutzfahrzeuge GmbH, 80809 München (DE)
(72) Inventor: Balogh, Levente, 2319 Szigetszentmiklos (HU); Krabot, Matyas, 2310 Szigetszentmiklós (HU); Bordacs, Zoltan, 8200 Veszprém (HU); Zeman, Ferenc, 1114 Budapest (HU)
(74) Representative: Mattusch, Gundula

(56) References cited:
- EP-A1- 1 504 975
- EP-A2- 1 531 100
- DE-A1-102009 037 636
- DE-B3-102008 027 732

## Description

The invention relates to a method for operating an electrically operable parking brake system of a vehicle comprising a towing vehicle, wherein an implementation of a trailer test function is initialised by applying the electrically operable parking brake system.

The present invention further relates to a control device for an electrically operable parking brake system of a vehicle comprising a towing vehicle designed for implementing the method according to the invention.

Vehicles, for example, utility vehicles, which drive on land may comprise a towing vehicle and a trailer coupled to the towing vehicle. For safely braking such a vehicle, a service brake is usually provided which brakes the towing vehicle as well as the trailer. Further, a parking brake system independent of the service brake is generally provided which secures the vehicle in the parked state to prevent an uncontrolled rolling away of the vehicle. The service brake and the parking brake system may, conceptually, be referred to as the brake system of the vehicle.

In modern vehicles, the service brake as well as the parking brake system are often electrically operable. Accordingly, for example, electric signals generated by the operating devices are transmitted to control devices of the service brake and/or the parking brake system which in turn control the operation, i.e., particularly the releasing and applying of the brake system of the service brake and/or the parking brake system. The braking forces generated by the service brake and the parking brake system are generally generated by brake cylinders located at the different axles of the vehicle that respectively each control, for example, a brake calliper. In doing so, a pneumatic service brake and a pneumatic parking brake system are frequently used, particularly in the case of utility vehicles, as pneumatic systems are capable of providing braking forces independent of the magnitude of an operating force to be produced by the driver of the vehicle. The brake cylinders may, for example, be simple diaphragm brake cylinders or combination cylinders.

Diaphragm brake cylinders can generate a braking force when supplied with pressurised air. Combination cylinders are generally equipped with a spring brake part capable of generating a braking force in a non-pressurized state in addition to a diaphragm part which may be functionally equivalent to a diaphragm brake cylinder. Diaphragm brake cylinders and diaphragm parts of combination cylinders may be controllable by the service brake. Spring brake parts may be controllable by the parking brake system. Combination cylinders may also be referred to as spring-operated brake cylinders. Compared to simple brake cylinders which are not capable of generating any braking forces in a non-pressurized state, combination cylinders have a more complex design and are accordingly more expensive. For this reason, often not all of the axles of the vehicle are provided with combination cylinders. In particular, a coupled trailer may have some vehicle axles which are not provided with combination cylinders. Further, it is possible that some axles of a coupled trailer are provided with diaphragm brake cylinders used to generate a braking force by both the service brake and the parking brake system.

When the vehicle is parked, sufficient pressure is available so that the diaphragm brake cylinder of the trailer controlled by the parking brake system can be reliably applied. The trailer will then also be braked by the applied parking brake system. However, the parking brake system of the vehicle must be capable of securing the vehicle during a prolonged parking time of the vehicle, i.e., particularly in a non-pressurized state of the entire brake system. However, diaphragm brake cylinders controlled by the parking brake system are released in the non-pressurized state so that the braking force provided by the parking brake system may diminish with time.

For safety reasons, the driver of the vehicle should already be able to judge whether the vehicle can also be permanently secured by the parking brake system in the non-pressurized state when parking the vehicle. For this purpose, the vehicle may be designed so as to enable the implementation of a so-called trailer test function in which it is checked whether the parking brake system of the towing vehicle can secure the entire vehicle.

An automatic implementation of a trailer test for checking the functionality of the parking brake system of the vehicle during each parking procedure is already known from the DE 10 2008 027 732 B3. Further, EP 1 531 100 A2 describes an actuation unit for an electrical parking brake system that is also used for manually initiating a trailer test function. EP 1 504 975 A1 describes a parking brake system that is actuatable via a manual actuating unit. DE 10 2009 037 636 A1 is related to a test function for a valve unit of the parking brake that can be executed when the vehicle is moving or when the vehicle stands still.

The invention is based on the object to provide a particularly advantageous possibility to interrupt the trailer test function.

This object is solved by the features of the independent claims.

Advantageous embodiments and further developments of the invention can be derived from the dependent claims.

The invention is based on the generic method in that the execution of the trailer test function is stopped and/or interrupted when at least one of the following conditions is fulfilled:
- a service brake of the vehicle is applied,
- a gear is engaged,
- a supply pressure of the electrically operable parking brake system is too low.

It may be contemplated that the execution of the trailer test function may be stopped or interrupted when additional to the conditions mentioned above, the vehicle is moving, the electrically operable parking brake system is released or an error is detected.

By applying the service brake of the vehicle, the vehicle can be returned to a safe operational state simultaneously with the interruption of the method, and in doing so, an additional braking force is already provided by applying the service brake in order to bring the possibly rolling vehicle to a halt again before the parking brake system of the trailer provides an additional braking force. The response time of the vehicle to a termination of the method can therefore be reduced. Further, the driver of the vehicle may intuitively interrupt the trailer test function upon realising that the vehicle has started to roll. When a gear is engaged, the trailer test function can give an unrealistic result of the braking force that can be generated by the parking brakes of the towing vehicle because of an additional force due to friction within a vehicle engine and a gearbox. Thus, the execution of the trailer test function with an engaged gear leads to false results. When the supply pressure of the electrically operable parking brake system is too low, the braking force that may be generated may be incorrect due to false pneumatic control signals that are related to the applying and/or releasing of the vehicle brakes. When the vehicle is moving at the beginning of the trailer test function, a result of the trailer test function is always false, but the result may be wrong. It is impossible to decide whether the parking brake of the trailer can hold the vehicle when the trailer test function starts while the vehicle is moving. When the electronically operable parking brake system is released, a parking process of the vehicle may be stopped, and the execution of the trailer test function may be spared.

Usefully, it may be contemplated that prior to the implementation of the trailer test function, it will be checked whether a trailer is coupled to the towing vehicle. In this connection, ascertaining that a trailer is coupled to the towing vehicle may also comprise the condition that it cannot be detected whether a trailer is coupled to the towing vehicle, since in this case, it cannot be excluded that a trailer is coupled to the towing vehicle even though a coupling is not detectable. In this case, the implementation of the trailer test function may be reasonable for safety reasons. Skipping the trailer test function may contribute to a reduction of the time required for safely parking the vehicle which may contribute to an improved comfort experience for the driver of the vehicle.

It may be further contemplated that an acoustic signal and/or a visual signal that the trailer test function is being executed or has to be executed is generated. In this way, the driver may be informed that the trailer test function must be started when the vehicle is parked, or that a trailer test function is currently executed. This allows the driver to manually start and/or interrupt and/or supervise the execution of the trailer test function. The acoustic signal may be, for example, an audio alarm or a melody. The visual signal may be, for example, a change in the status of a signal light or a written message on a display of a board computer. The acoustic signal and/or the visual signal may be generated, for example, such that they can be experienced in a driver cabin of the vehicle.

Further, it may be contemplated that a vehicle speed is detected and that a successful implementation of the trailer test function is determined based on the detected vehicle speed. The vehicle speed can be used as a readily detectable, objective parameter for monitoring the implementation of the trailer test function and, in particular, a successful completion of the trailer test function. Particularly, the fact that a vehicle is standing at the beginning of the trailer test function and at the end of the trailer test function, i.e., the vehicle speed is zero at the beginning and at the end of the trailer test function, can be used as a criterion. The vehicle speed may, for example, be detected with the aid of rotational speed sensors. Rotational speed sensors may, for example, already be provided as part of an antilock braking system of the service brake of the vehicle.

It may be contemplated that the automatic implementation of the trailer test function comprises waiting for at least one manual input. Manual inputs during the execution of the method, in particular, prior to and during the actual execution of the trailer test function, may, for example, enable a facilitated modifiability of the trailer test function. In this context, the term "waiting" may particularly mean that the method remains in a defined state and waits for the required manual input. The execution of the method will continue only when the manual input has been effected.

In this connection, it may be contemplated that the at least one manual input comprises a confirmation of a successful execution of the trailer test function. In this way a conscious monitoring of the execution of the trailer test function by the driver can be accomplished. In particular, the confirmation of the successful execution of the trailer test function may comprise the confirmation that the vehicle is standing both during and at the end of the implemented trailer test function.

Advantageously, it may also be contemplated that the at least one manual input comprises a confirmation that the trailer test function is to be implemented. In this way, for example, a conscious perception of the execution of the trailer test function by the driver can be ensured when the actual execution and/or the initial starting of the trailer test function is automated.

Usefully, it may be contemplated that the execution of the trailer test function is interrupted when at least one of the following conditions occurs or exists:
- the vehicle speed cannot be determined,
- a state of the service brake cannot be determined,
- a gear state cannot be determined,
- the electrically operable parking brake system is in restricted mode,
- a shift pressure of the electrically operable parking brake system is not reached,
- the execution of the trailer test function takes longer than a predeterminable maximum period of time.

Each of the above conditions may, independent from the other conditions, prevent a reasonable/successful implementation of the trailer test function. Each of these conditions may, for example, be the result of an error. The restricted mode may additionally be the result of a maintenance. For example, a result of the trailer test function cannot at all be determined if the vehicle speed cannot be detected. If the supply pressure of the electrically operable parking brake system is too low and/or a shift pressure/operating pressure of the electrically operable parking brake system is not reached, it cannot be ensured that the trailer is actually unbraked during the implementation of the trailer test function. If the implementation of the trailer test function takes longer than a predeterminable maximum period of time, the actual execution of the trailer test function is unacceptable for the driver when parking the vehicle, as parking the vehicle is disproportionally delayed by enforcing the execution of the trailer test function. The period of time may, for example, be a factory preset or dynamically determined/modified based on detectable parameters when parking the vehicle. The usable measured parameters may, in particular, include an inclination angle of the vehicle correlating to a placement of the vehicle on a slope and a loading of the vehicle. Both parameters may influence the required maximum period of time.

It may further be contemplated that a restart of the method after an interruption of the trailer test function is prevented. In this way, the placement of the vehicle without the automatic implementation of the trailer test function may be enabled. Preventing the restart of the trailer test function is useful, for example, in case of a defect in which the sensors for detecting the vehicle speed fail.

It may further be contemplated that a trailer brake of the trailer is applied prior to the end of the method. The end of the method may, in particular, comprise the completion of the method according to the proper implementation of the trailer test function as well as the termination of the method. By applying the trailer brake, the vehicle may be transferred into a safe operating state as opposed to the operating state given during the trailer test. In this connection, a brake of the trailer which is, in particular, controllable by the parking brake system of the vehicle may be regarded as the trailer brake and may be at least temporarily released during the implementation the trailer test function.

The invention will now be explained by way of example with the aid of preferred embodiments and with reference to the accompanying drawings in which:
- Figure 1: shows a flow chart of a method for implementing a trailer test function;
- Figure 2: shows an exemplary circuit diagram of a electrically operable parking brake system; and
- Figure 3: shows a schematic representation of a vehicle.

In the following drawings, the same reference numerals designate identical or equivalent parts. The incidences, conditions, and similar situations described below may regularly be detected by sensors provided in the vehicle.

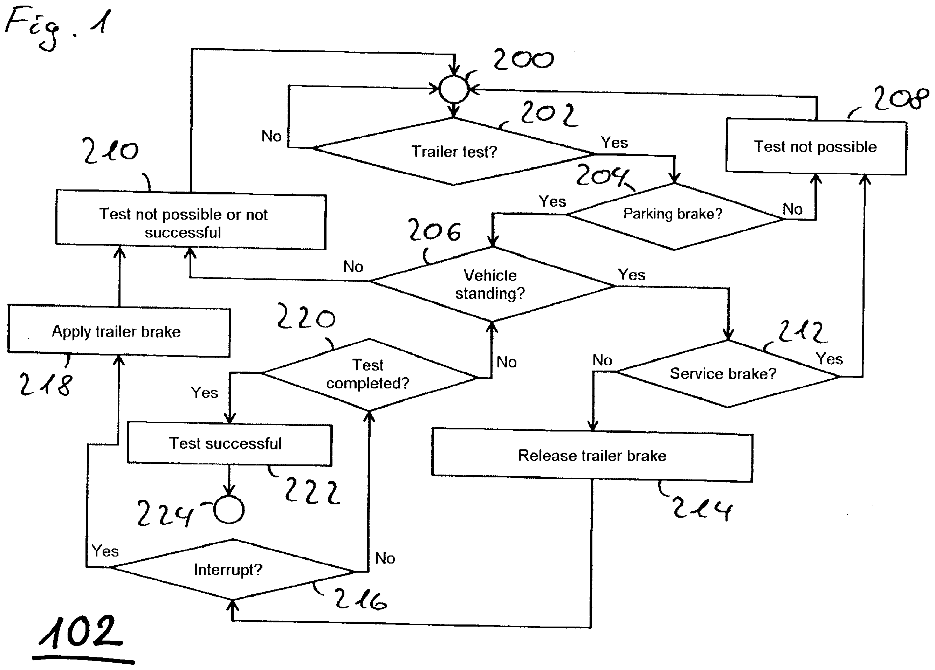

Figure 1 shows a flow chart of a method for implementing a trailer test function. The method 102 illustrated in Figure 1 may be capable of at least partially independently implementing a trailer test function in an electrically operable parking brake system following the start of the method. The method 102 may, for example, be implemented by a control device of the electrically operable parking brake system, wherein the control device may be designed for implementing of the method 102. The method 102 illustrated in Figure 1 may, for example, start from Step 200. Starting from Step 200, it can be checked in Step 202 whether a trailer test is to be implemented, for example, with the aid of a trailer test function. The automatic implementation of the trailer test may, for example, be initiated by manually applying the parking brake system of the vehicle or another process provided for applying the parking brake system. If the trailer test is not to be implemented - NO in Step 202 - the method 102 may be independently restarted in Step 200. In this way, the method 102 may automatically monitor whether it is to be implemented. If the trailer test is to be implemented - YES in Step 202 - the process can be continued with Step 204. In Step 204, it may be checked whether the parking brake, i.e., the parking brake system of the vehicle, is released or applied. If the parking brake system is released - NO in Step 204 - the process can be continued with Step 208. In Step 208, for example, a signal may be output which notifies the driver of the vehicle of the fact that an execution of the trailer test is not possible. The signal may, for example, be acoustic and/or visual and comprise, in particular, an audio alarm, a change in the status of a signal light, and/or a written message on a display of an on-board computer in the vehicle cabin. Starting from Step 208, the method 102 may be independently restarted in Step 200. A released parking brake system may, for example, be given if the driver either accidentally or intentionally manually initiates the execution of the trailer test function while driving, i.e., particularly prior to a standstill of the vehicle. If the parking brake system is applied - YES in Step 204 - the process can be continued with Step 206. In Step 206, it can be checked whether the vehicle is standing. If it cannot be detected whether the vehicle is standing, for example, due to a defective sensor, it may be assumed for security reasons that the vehicle is moving. If the vehicle is not standing - NO in Step 206 - the process can be continued with Step 210. In Step 210, for example, a signal may be output to the driver of the vehicle to inform him that the execution of the trailer test function is not possible or not successful. The signal may, for example, be acoustic and/or visual and may, in particular, comprise an acoustic alarm, a change in the status of a signal lamp, and/or a written message on a display of an on-board computer in the vehicle interior. Starting from Step 210, the method may be restarted in Step 200. The vehicle may not be standing despite the applied parking brake system in Step 206 if the vehicle driver has applied the parking brake, for example, at a low remaining speed prior to a complete halt. In this case, the implementation of the trailer test may not be possible as the vehicle must stand during the trailer test, particularly in the beginning. By applying the parking brake system while driving, however, a braking force decelerating the vehicle is generated so that in case of the restart in Step 210, a later implementation of the trailer test function may be possible if the vehicle has come to a halt. It is also possible that the vehicle starts rolling during the implementation of the trailer test when the parking brake system of the towing vehicle does not develop a sufficient braking force to secure the vehicle. In this case, the trailer test function was not successfully implemented. If the vehicle is rolling despite the applied parking brake system, the application of the service brake of the vehicle can additionally be provided in Step 210 to stop the vehicle as quickly as possible. The application of the service brake may be realised by a corresponding request to a control device of the service brake. Alternatively, the control device of the parking brake system may also be designed so as to directly apply the service brake while bypassing a control device of the service brake.

If the vehicle is standing - YES in Step 206 - the process can be continued with Step 212. In Step 212, it may be checked whether the service brake of the vehicle is applied. If the service brake of the vehicle is applied - YES in Step 212 - the process can be continued with Step 208. The application of the service brake may therefore be used to interrupt the execution of the trailer test function or of the method. If the service brake is released, it may be checked whether the parking brake system of the towing vehicle is capable of securing the entire vehicle by itself. If the service brake is released - NO in Step 212 - a trailer brake may be released in Step 214. The trailer brake may, in particular, designate the brake cylinders of the trailer controllable by the parking brake system. The release of the trailer brake may thus constitute the release of the parking brake of the trailer so that the trailer is unbraked, as it was already verified in Step 212 that the service brake is also released. From the execution of Step 214, therefore, the vehicle which is in a stillstand is secured exclusively by the parking brake system of the towing vehicle. A starting point of a predeterminable time interval, the expiry of which may define an end of the trailer test function, may be coupled to the release of the trailer brake. The length of the time interval may, for example, be a factory preset and/or dynamically determined/adjusted based on measurable parameters. In particular, a vehicle inclination and/or a vehicle weight/payload may be used as measurable parameters. The driver may be acoustically and/or visually informed of the expiry of the predeterminable time interval, for example, by means of an associated optical indication on a display of an on-board computer in the vehicle interior and/or an acoustic language output. The method 102 may then be continued with Step 216, wherein it may be checked in Step 216 whether the trailer test function is to be interrupted or terminated. The interruption/termination of the trailer test function may be carried out when at least one of the following conditions occurs:
- applying the service brake,
- a vehicle speed cannot be determined,
- a supply pressure of the electrically operable parking brake system is too low,
- a shift pressure of the electrically operable parking brake system is not reached,
- the execution of the trailer test function takes longer than a predeterminable maximum period of time.

If the trailer test function should not be interrupted/terminated - NO in Step 216 - the process may be continued with Step 220. In Step 220, it may be checked whether the trailer test is completed. This may, for example, be verified by means of a predeterminable time interval which must have expired after the release of the trailer brake in Step 214 so that the trailer test is completed. If the test is not yet completed - NO in Step 220 - the process can be continued with Step 206 in which it is rechecked whether the vehicle is standing. If the test is completed - YES in Step 220 - a signal indicating that the trailer test has been successfully completed may be output in Step 222. The signal may, for example, be acoustic and/or visual and comprise, in particular, an acoustic signal, a change in the status of a signal lamp, and/or a written message on a display of an on-board computer in the vehicle interior. The method 102 can then be completed in Step 224, wherein, prior to the completion of the method 102, the trailer brake may be reapplied to better secure the vehicle against undesired rolling. If it is determined in Step 216 that the trailer test is to be interrupted/terminated - YES in Step 216 - the process can be continued with Step 218. In Step 218, the trailer brake may be first reapplied to transfer the vehicle into an operating state characterised particularly by a higher braking efficiency compared to the prior operating state during the execution of the trailer test. The process may then be continued in Step 210 by outputting the signal indicating that the execution of the trailer test function is not possible or not successful.

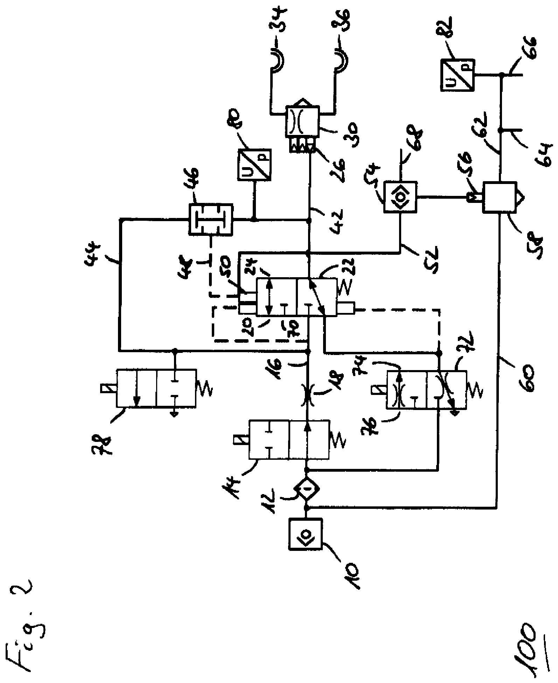

Figure 2 shows an exemplary circuit diagram of an electrically operable parking brake system. The illustrated electrically operable parking brake system 100 may be connected to a pressurised air processing system (not shown) via a non-return valve 10. An optional filter unit 12 through which pressurised air may be supplied to a supply solenoid valve 14 which may be designed as a 2/2 directional valve may follow the non-return valve 10. A first working connection 20 of a control valve device 22 may be connected to the outlet of the supply solenoid valve 14 via a supply line section 16 and an optional throttle 18. The control valve device 22 may be designed as a pneumatically controllable 3/2 directional valve. A second working connection 24 of the control valve device 22 may lead to a control input 26 of a trailer control module 30. It may operate a supply connection 34 and a control connection 36 of the trailer coupling. The trailer control line branches 42, 44 may be connected to the inlets of a select low valve 46, the outlet of which may be connected to a control inlet 50 of the control valve device 22 via a control line 48. The select low valve 46 may operate so that at its outlet, i.e., in the control line 48, the lower inlet pressure may be applied, i.e., the lower one of the pressures from the two trailer control line branches 42, 44. The control line 48 may further be connected to a relay control inlet 56 of a relay valve 58 via a relay control line 52 and a shuttle valve 54. The relay valve 58 may be supplied with pressurised air from of a location upstream of the supply solenoid valve 14 via a relay supply line 60. A relay outlet line 62 may lead to branch lines 64, 66 to which a spring brake cylinder (not shown) may be connected. Further, a service brake line 68 may be connected to the shuttle valve 54. A port 74 of a control and exhaust valve device 72 may be connected to a vent port 70 of the control valve device 22. A further port 76 of the control and exhaust valve device 72 may be supplied with pressurised air from a location between the filter unit 12 and the supply solenoid valve 14. Further, an exhaust solenoid valve 78 designed as a 2/2 directional valve may be provided which may be connected to the supply line section 16. Further, pressure sensors 80, 82 for detecting the pressures at the second working connection 24 of the control valve device 22 as well as the relay outlet line 62 may be provided. The pressure sensor 80 may, for example, measure a shift pressure of the electrically operable parking brake system 100. A supply pressure of the electrically operable parking brake system 100 may, for example, be detected by a pressure sensor (not shown) between the non-return valve 10 and the filter unit 12.

The electrically operable parking brake system 100 illustrated in Figure 2 may further comprise a first control device (not shown in this Figure) and a manual operating device (also not shown). The operating device may be connected to the first control device via an interface. The operating device may be designed for manually releasing and applying the parking brake system 100 as well as for manually initiating the implementation of the trailer test function.

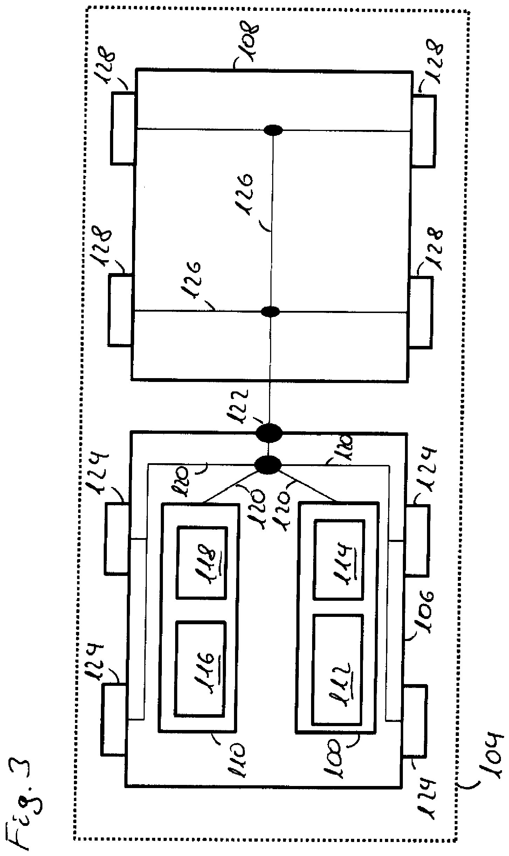

Figure 3 shows a schematic representation of a vehicle. Figure 3 shows a schematic view of the vehicle 104 which may comprise a towing vehicle 106 and a trailer 108. The vehicle 104 may comprise an electrically operable parking brake system 100 and a service brake 110. In turn, the electrically operable parking brake system 100 may comprise a first control device 112 and an electrically operable valve array 114 which may be controllable by the first control device 112. The electrically operable valve array 114 may, for example, be associated or identified with the circuit diagram shown in Figure 2. The electrically operable parking brake system 100 may be coupled to at least one wheel brake 124 on at least one axle of the towing vehicle 106 via a pneumatic line 120. Further, the electrically operable parking brake system 100 may be connected to a pneumatic trailer connection 122 via the pneumatic line 120. The pneumatic trailer connection 122 may be identified with the trailer control module 30 or the control connection 36. Analogously, the service brake 110 may comprise a second control device 116 and a valve array 118. Further, the service brake 110 may also be connected to the at least one wheel brake 124 and the pneumatic trailer connection 122 via the pneumatic lines 120. In this connection, it is clear to the person skilled in the art that the pneumatic line 120 only suggests the pneumatic couplings between the service brake 110, the electrically operable parking brake system 100, the pneumatic trailer connection 122, and the wheel brakes 124, as, for example, a combination cylinder located in the area of the at least one wheel brake 124 comprises two independent pneumatic connections for the service brake 110 and the parking brake system which are independently coupled to the electrically operable parking brake system 100 and the service brake 110.

The trailer 108 may be pneumatically coupled to the trailer connection 122, wherein pneumatic control pressures may be transferred to at least one trailer wheel brake 128 of the trailer 108 via at least one pneumatic line 126. In connection with the at least one trailer wheel brake 128, combination cylinders may also be provided at least to some extent so that the at least one pneumatic line 126 may illustrate existing couplings in a simplified manner analogous to the pneumatic lines 120 of the towing vehicle 106.

The features of the invention disclosed in the above description, the drawings as well as the claims may be important for the realisation of the invention individually as well as in any combination.

### List of Numerals

- 10: non-return valve
- 12: filter unit
- 14: supply solenoid valve
- 16: supply line section
- 18: throttle
- 20: first working connection
- 22: control valve device
- 24: second working connection
- 26: control input
- 30: trailer control module
- 34: supply connection
- 36: control connection
- 42: trailer control line branches
- 44: trailer control line branches
- 46: select low valve
- 48: control line
- 50: control input
- 52: relay control line
- 54: shuttle valve
- 56: relay control input
- 58: relay valve
- 60: relay supply line
- 62: relay outlet line
- 64: branch line
- 66: branch line
- 68: service brake line
- 70: vent port
- 72: control and exhaust valve device
- 74: connection
- 76: connection
- 78: exhaust solenoid valve
- 80: pressure sensor
- 82: pressure sensor
- 100: electrically operable parking brake system
- 102: method
- 104: vehicle
- 106: towing vehicle
- 108: trailer
- 110: service brake
- 112: first control device
- 114: electrically operable valve array
- 116: second control device
- 118: valve array
- 120: pneumatic line
- 122: trailer connection
- 124: wheel brake
- 126: pneumatic line
- 128: trailer wheel brake
- 200: start
- 202: trailer test?
- 204: parking brake?
- 206: vehicle standing?
- 208: test not possible
- 210: test not possible or not successful
- 212: service brake?
- 214: release trailer brake
- 216: interrupt?
- 218: apply trailer brake
- 220: test completed?
- 222: test successful
- 224: end

## Claims

1. A method (102) for operating an electrically operable parking brake system (100) of a vehicle (104) comprising a towing vehicle (106), wherein an execution of a trailer test function is initiated by applying the electrically operable parking brake system (100), **characterised in that** the execution of the trailer test function is stopped and/or interrupted when at least one of the following conditions is fulfilled:
- a service brake (110) of the vehicle (104) is applied,
- a gear is engaged,
- a supply pressure of the electrically operable parking brake system (100) is too low.

2. The method (102) according to claim 1, **characterised in that,** prior to the execution of the trailer test function, it is checked whether a trailer (108) is coupled to the towing vehicle (106).

3. The method (102) according to claim 1 or 2, **characterised in that,** an acoustic signal and/or a visual signal that the trailer test function is or has to be executed is generated.

4. The method (102) according to one of the preceding claims, **characterised in that** a vehicle speed is determined and **in that** a successful execution of the trailer test function is ascertained based on the determined vehicle speed.

5. The method (102) according to one of the preceding claims, **characterised in that** the automatic implementation of the trailer test function comprises waiting for at least one manual input.

6. The method (102) according to claim 5, **characterised in that** the at least one manual input comprises a confirmation of a successful execution of the trailer test function.

7. The method (102) according to claim 5 or 6, **characterised in that** the at least one manual input comprises a confirmation that the trailer test function is to be implemented.

8. The method (102) according to one of the preceding claims, **characterised in that** the execution of the method (102) is terminated if at least one of the following conditions occurs or is given:
- a vehicle speed cannot be determined,
- a state of the service brake (110) cannot be determined,
- a gear state cannot be determined,
- the electrically operable parking brake system (100) is in restricted mode,
- a shift pressure of the electrically operable parking brake system (100) is not reached,
- the execution of the trailer test function takes longer than a predeterminable maximum period of time.

9. The method (102) according to one of the preceding claims, **characterised in that** a restart of the method (102) after a termination of the trailer test function is prevented.

10. The method (102) according to one of the preceding claims, **characterised in that,** prior to a completion of the method (102), a trailer brake of the trailer (108) is applied.

11. The method according to claim 1, **characterized in that** the execution of the trailer test function is stopped or interrupted when additional to the conditions mentioned in claim 1 the vehicle is moving, the electrically operable parking brake system (100) is released or an error is detected.

12. A control device (112) for an electrically operable parking brake system (100) of a vehicle (104) comprising a towing vehicle (106), wherein the control device (112) is designed for implementing the method (102) according to one of the preceding claims.

## Patentansprüche

1. Verfahren (102) zum Betreiben eines elektrisch betreibbaren Feststellbremssystems (100) eines Fahrzeugs (104), das ein Zugfahrzeug (106) umfasst, wobei eine Ausführung einer Anhängerprüffunktion durch Betätigen des elektrisch betreibbaren Feststellbremssystems (100) eingeleitet wird, **dadurch gekennzeichnet, dass** die Ausführung der Anhängerprüffunktion gestoppt und/oder unterbrochen wird, wenn mindestens eine der folgenden Bedingungen erfüllt ist:
- eine Betriebsbremse (110) des Fahrzeugs (104) wird betätigt,
- ein Gang ist eingelegt.
- ein Versorgungsdruck des elektrisch betreibbaren Feststellbremssystems (100) ist zu niedrig.

2. Verfahren (102) nach Anspruch 1, **dadurch gekennzeichnet, dass** vor der Ausführung der Anhängerprüffunktion überprüft wird, ob ein Anhänger (108) mit dem Zugfahrzeug (106) gekoppelt ist.

3. Verfahren (102) nach Anspruch 1 oder 2, **dadurch gekennzeichnet, dass** ein akustisches Signal und/oder ein visuelles Signal, dass die Anhängerprüffunktion ausgeführt wird oder werden muss, erzeugt wird.

4. Verfahren (102) nach einem der vorhergehenden Ansprüche, **dadurch gekennzeichnet, dass** eine Fahrzeuggeschwindigkeit bestimmt wird und dass eine erfolgreiche Ausführung der Anhängerprüffunktion basierend auf der bestimmten Fahrzeuggeschwindigkeit festgestellt wird.

5. Verfahren (102) nach einem der vorhergehenden Ansprüche, **dadurch gekennzeichnet, dass** die automatische Implementierung der Anhängerprüffunktion Warten auf mindestens eine manuelle Eingabe umfasst.

6. Verfahren (102) nach Anspruch 5, **dadurch gekennzeichnet, dass** die mindestens eine manuelle Eingabe eine Bestätigung einer erfolgreichen Ausführung der Anhängerprüffunktion umfasst.

7. Verfahren (102) nach Anspruch 5 oder 6, **dadurch gekennzeichnet, dass** die mindestens eine manuelle Eingabe eine Bestätigung, dass die Anhängerprüffunktion implementiert werden soll, umfasst.

8. Verfahren (102) nach einem der vorhergehenden Ansprüche, **dadurch gekennzeichnet, dass** die Ausführung des Verfahrens (102) beendet wird, wenn mindestens eine der folgenden Bedingungen eintritt oder gegeben ist:
- eine Fahrzeuggeschwindigkeit kann nicht bestimmt werden,
- ein Zustand der Betriebsbremse (110) kann nicht bestimmt werden,
- ein Gangzustand kann nicht bestimmt werden,
- das elektrisch betreibbare Feststellbremssystem (100) befindet sich in einem eingeschränkten Modus,
- ein Schaltdruck des elektrisch betreibbaren Feststellbremssystems (100) wird nicht erreicht,
- die Ausführung der Anhängerprüffunktion dauert länger als eine vorbestimmbare maximale Zeitdauer.

9. Verfahren (102) nach einem der vorhergehenden Ansprüche, **dadurch gekennzeichnet, dass** ein Neustart des Verfahrens (102) nach einer Beendigung der Anhängerprüffunktion verhindert wird.

10. Verfahren (102) nach einem der vorhergehenden Ansprüche, **dadurch gekennzeichnet, dass** vor einem Abschluss des Verfahrens (102) eine Anhängerbremse des Anhängers (108) betätigt wird.

11. Verfahren nach Anspruch 1, **dadurch gekennzeichnet, dass** die Ausführung der Anhängerprüffunktion gestoppt und/oder unterbrochen wird, wenn zusätzlich zu den in Anspruch 1 genannten Bedingungen sich das Fahrzeug bewegt, das elektrisch betreibbare Feststellbremssystem (100) gelöst wird oder ein Fehler detektiert wird.

12. Steuervorrichtung (112) für ein elektrisch betreibbares Feststellbremssystem (100) eines Fahrzeugs (104), das ein Zugfahrzeug (106) umfasst, wobei die Steuervorrichtung (112) zum Implementieren des Verfahrens (102) nach einem der vorhergehenden Ansprüche ausgelegt ist.

## Revendications

1. Procédé (102) pour faire fonctionner un système (100) de frein de stationnement, pouvant fonctionner électriquement, d'un véhicule (104) comprenant un véhicule (106) de traction, dans lequel on lance l'exécution d'une fonction de test de remorque en appliquant le système (100) de frein de stationnement, pouvant fonctionner électriquement, **caractérisé en ce que** l'on arrête l' exécution de la fonction de test de remorque et/ou on l'interrompt lorsqu'au moins l'une des conditions suivantes est satisfaite :
- un frein (110) de service du véhicule (104) est appliqué,
- une vitesse est enclenchée,
- une pression d'alimentation du système (100) de frein de stationnement, pouvant fonctionner électriquement, est trop basse.

2. Procédé (102) suivant la revendication 1, **caractérisé en ce que**, avant l'exécution de la fonction de test de remorque, on vérifie si une remorque (108) est attelée au véhicule (106) de traction.

3. Procédé (102) suivant la revendication 1 ou 2, **caractérisé en ce que** l'on produit un signal acoustique et/ou un signal visuel indiquant que la fonction de test de remorque est exécutée ou doit l'être.

4. Procédé (102) suivant l'une des revendications précédentes, **caractérisé en ce que** l'on détermine une vitesse du véhicule et **en ce que** l'on constate une exécution couronnée de succès de la fonction de test de remorque sur la base de la vitesse du véhicule, qui a été déterminée.

5. Procédé (102) suivant l'une des revendications précédentes **caractérisé en ce que** la mise en œuvre automatique de la fonction de test de remorque comprend attendre au moins une entrée manuelle.

6. Procédé (102) suivant la revendication 5, **caractérisé en ce que** la au moins une entrée manuelle comprend une confirmation de l'exécution couronnée de succès de la fonction de test de remorque.

7. Procédé (102) suivant la revendication 5 ou 6, **caractérisé en ce que** la au moins une entrée manuelle comprend une confirmation que la fonction de test de remorque a été mise en œuvre.

8. Procédé (102) suivant l'une des revendications précédentes, **caractérisé en ce que** l'on met fin à l'exécution du procédé (102) si au moins l'une des conditions suivantes se produit ou est donnée :
- on ne peut pas déterminer une vitesse du véhicule,
- on ne peut pas déterminer un état du frein (110) de service,
- on ne peut pas déterminer un état d'une vitesse,
- le système (100) de frein de stationnement, pouvant fonctionner électriquement, est en mode restreint,
- une pression de changement du système (100) de frein de stationnement, pouvant fonctionner électriquement, n'est pas atteinte,
- l'exécution de la fonction de test de remorque prend plus de temps qu'une durée maximum pouvant être déterminée à l'avance.

9. Procédé (102) suivant l'une des revendications précédentes, **caractérisé en ce qu'**on empêche un recommencement du procédé (102), après qu'il a été mis fin à la fonction de test de remorque.

10. Procédé (102) suivant l'une des revendications précédentes **caractérisé en ce qu'**avant un achèvement du procédé (102), on applique un frein de remorque à la remorque (108).

11. Procédé (102) suivant la revendication 1, **caractérisé en ce que** l'on arrête l'exécution de la fonction du test de remorque ou on l'interrompt, lorsque, en plus des conditions mentionnées à la revendication 1, le véhicule est en déplacement, le système (100) de frein de stationnement, pouvant fonctionner électriquement, est desserré ou une erreur est détectée.

12. Dispositif (112) de commande d'un système (100) de frein de stationnement pouvant fonctionner électriquement, d'un véhicule (104) comprenant un véhicule (106) de traction, le dispositif (112) de commande étant conçu pour mettre en œuvre le procédé (102) suivant l'une des revendications précédentes.
